(19) Europäisches Patentamt
European Patent Office
Office européen des brevets

(11) **EP 1 669 869 B1**

(12) **EUROPEAN PATENT SPECIFICATION**

(45) Date of publication and mention
of the grant of the patent:
**12.03.2014 Bulletin 2014/11**

(21) Application number: **04773277.1**

(22) Date of filing: **17.09.2004**

(51) Int Cl.:
***G06F 11/34*** *(2006.01)*

(86) International application number:
**PCT/JP2004/013642**

(87) International publication number:
**WO 2005/033940 (14.04.2005 Gazette 2005/15)**

(54) **MANAGEMENT DEVICE FOR MANAGING INFORMATION PROCESSING DEVICE, MANAGING SYSTEM, PROGRAM, AND RECORDING MEDIUM**

VERWALTUNGSEINRICHTUNG FÜR VERWALTUNGS-INFORMATIONSVERARBEITUNGSEINRICHTUNG, VERWALTUNGSSYSTEM, PROGRAMM UND AUFZEICHNUNGSMEDIUM

DISPOSITIF DE GESTION POUR GERER UN DISPOSITIF DE TRAITEMENT D'INFORMATIONS, SYSTEME DE GESTION, PROGRAMME, ET SUPPORT D'ENREGISTREMENT

(84) Designated Contracting States:
**DE FR GB**

(30) Priority: **30.09.2003 JP 2003342279**

(43) Date of publication of application:
**14.06.2006 Bulletin 2006/24**

(73) Proprietor: **Lenovo (Singapore) Pte. Ltd.**
**Singapore 556741 (SG)**

(72) Inventors:
• **YAMAKOSHI, Naoki,**
**c/o Yamato site, IBM Japan Ltd.**
**Yamato-shi, Kanagawa 2428502 (JP)**

• **FUKUDA, Hidekazu,**
**c/o Yamato site, IBM Japan Ltd.**
**Yamato-shi, Kanagawa 2428502 (JP)**

(74) Representative: **Weston, Robert Dale et al**
**PHILLIPS & LEIGH**
**5 Pemberton Row**
**London EC4A 3BA (GB)**

(56) References cited:
**JP-A- 8 331 275        JP-A- 2000 029 743**
**JP-A- 2002 297 409        US-A- 6 038 586**
**US-B1- 6 393 101        US-B1- 6 401 238**

## Description

## Technical Field

The present invention relates to management of an information processing apparatus, in particular to a management apparatus for instructing an information processing apparatus to execute a management program, a management system, a program and a recording medium.

## Background Art

Recently, with the spread of computer networks, it is common to construct an intranet in an office. Thereby, communication or information sharing among users is facilitated, and improvement of efficiency in work, cost reduction and the like are realized.

Conventionally, when software to be installed in computers is updated, an administrator in an office has to install the software in each of computers in the intranet, which is a very troublesome work. Accordingly, there has been proposed a technique in which a server for centrally managing software to be installed performs installation processing for each client computer (see Patent Document 1 and Patent Document 2).

For example, Patent Document 1 discloses a technique in which a server for managing software performs installation processing only when the software installed on a client is not the latest version. Meanwhile, Patent Document 2 discloses a technique in which the number of clients to be delivered with software at the same time is controlled on the server side to reduce network traffic.

Patent Document 1: Published Unexamined Patent Application No. 2002-215400

Patent Document 2: Published Unexamined Patent Application No. 2003-50762

US 6401238 - B1 [BROWN ET AL, 4 June 2002] discloses:

A method for deploying an application to client computers across a computer network is operative in a server environment in which given conditions, such as network load and actual or relative time-of-day, are being monitored. The method begins by establishing at least one rule for determining which of a given set of application versions are to be served to a client computer, and by establishing at least one user profile for determining which of a given set of users have a given priority. In response to a request from a client computer to serve the application, the rule is resolved against the monitored conditions and the user profile to select an application version to serve to the client computer. The application version is then served to the client computer.

US 6393101 - B1 [BARSHEFSKY ET AL, 21 May 2002] discloses:

A method is provided for determining whether the state of a telecommunications switch (110) is adequate for a software upgrade or retrofit. A report stream of text messages relating to the state of, and events occurring on, the telecommunications switch is stored (200) by a server (102). Predetermined messages are detected in the report stream, including messages indicating hardware errors, alarms and other errors (202). The predetermined messages have a numerical value associated therewith (204). The numerical value reflects a probability of failure of a retrofit if the message is detected. As the predetermined messages are detected, their numerical values are accumulated into an accumulated value (206). The time period the report stream covers is determined and compared against an expected time (216). If the time period covered by the report stream does not exceed an expected time, then a determination regarding suitability for upgrade may not be reliable (222). If the accumulated value exceeds a threshold, the switch may not be fit for the retrofit (228, 232). A visual portion (300, 400, 500, 600, 700, 800) of a user interface on a client (104) is updated to reflect whether the switch is in an adequate state for a software upgrade. Hierarchical views of a user interface permit a user to view a failing subsystem, failure type, and associated detected messages in an organized manner.

US 6038586 - A [FRYE, 14 March 2000] discloses:

The present invention reduces complicated support and maintenance issues to a simple model. This model is called a procedure. A procedure includes two elements.

The first element is called "criteria". Criteria are specified by the user and are used to create a filter that determines which workstations, workstation directories, workstation files, users, and/or file server directories are to be updated. The second element of a procedure is called an "action". Actions are used to specify what steps are to be taken automatically at the selected workstations or file server directories. Any type of process that can be carried out from the workstation keyboard can be automated using an action. One embodiment of the invention provides a system for updating software on at least one computer connected to a computer network, including hardware and software for defining at least one procedure, the at least one procedure including a set of criteria specifying a predetermined condition of the at least one computer hardware and software, responsive to the hardware and software for defining, for executing a predetermined action, such as a program, when the set of criteria are true.

## Statement of Invention

The present invention and embodiments thereof are set forth in the appended claims.

### Disclosure of the Invention

### Problems to be Solved by the Invention

However, it may be unsuitable to install software at some time bands. For example, during working hours, users often use client computers, and installation of software may interfere with the work of the users. On the other hand, during hours other than the working hours, the client computers are often powered off, and the installation processing itself may be impossible.

Accordingly, the object of the present invention is to provide a management apparatus capable of causing a management program to be executed on an information processing apparatus, such as a client computer, during appropriate hours, a management system, a program and a recording medium.

### Means for Solving the Problems

In order to solve the above problem, the present invention provides a management apparatus for managing at least one information processing apparatus, the management apparatus comprising: use state acquisition means for acquiring a use state of the information processing apparatus and quantifying the acquired use state into an index value; index value recording means for recording the index value for each time band; time band selection means for selecting a time band where the index value recorded by the index value recording means is equal to or above a reference index value determined in advance, as a scheduled time band where execution of a management program on the information processing apparatus is scheduled; and program execution instruction means for causing the management program to be executed on the information processing apparatus at the scheduled time band selected by the time band selection means; a management system provided with the management apparatus; a program for controlling the management apparatus and a recording medium in which the program is recorded.

### Brief Description of the Drawings

Figure 1 shows the outline of a management system 10;

Figure 2 shows a block diagram of the management apparatus 20;

Figure 3 shows a block diagram of an information processing apparatus 30-1;

Figure 4 is a diagram for illustrating a use state acquired by use state acquisition means 210;

Figure 5 is a graph showing a use state acquired by the use state acquisition means 210;

Figure 6(A) shows an example of the data structure of an index value stored in a schedule DB 230, and Figures 6(B) and 6(C) are diagrams for illustrating a concrete example of the processing performed by time band selection means 260;

Figure 7 shows the operational flow of processing performed by the management apparatus 20 to cause the information processing apparatus 30-1 to execute a management program;

Figure 8 shows the details of the processing at S735 in Figure 7;

Figure 9 shows the details of the processing at S870 in Figure 8; and

Figure 10 shows an example of the hardware configuration of a computer 500 which functions as the management apparatus 20 or the information processing apparatuses 30-1 to 30-N.

**Best Mode for Carrying Out the Invention**

The present invention will be described through an embodiment of the invention. However, the embodiment below is not intended to limit the present invention to the claims, and all the combinations of characteristics described in the embodiment are not necessarily required for solution means of the invention.

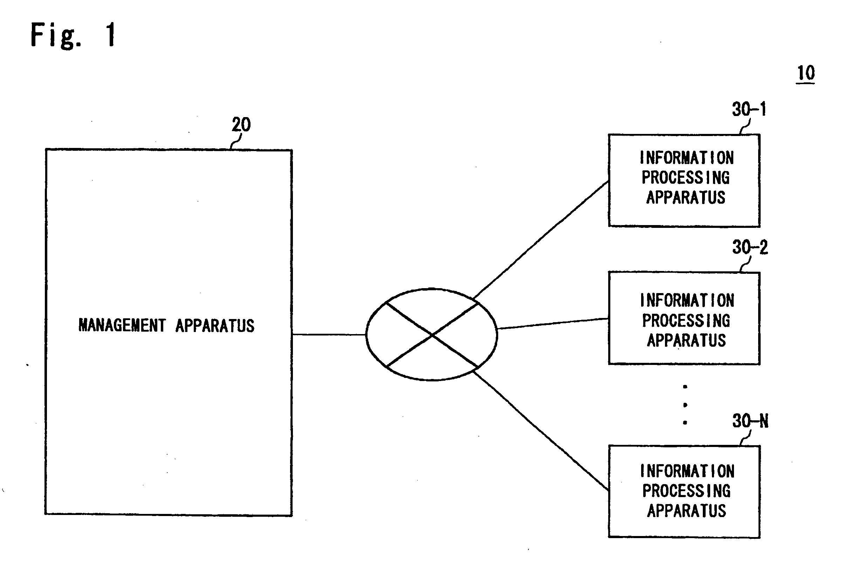

Figure 1 shows the outline of a management system 10. The management system 10 is provided with a management apparatus 20 which is a server computer, and information processing apparatuses 30-1 to 30-N which are client computers connected to the management apparatus 20 via a network. The management apparatus 20 is intended to cause the information processing apparatuses 30-1 to 30-N to execute a management program for managing the information processing apparatuses 30-1 to 30-N at such an appropriate time band that the works of the users of the information processing apparatuses 30-1 to 30-N are not interfered with.

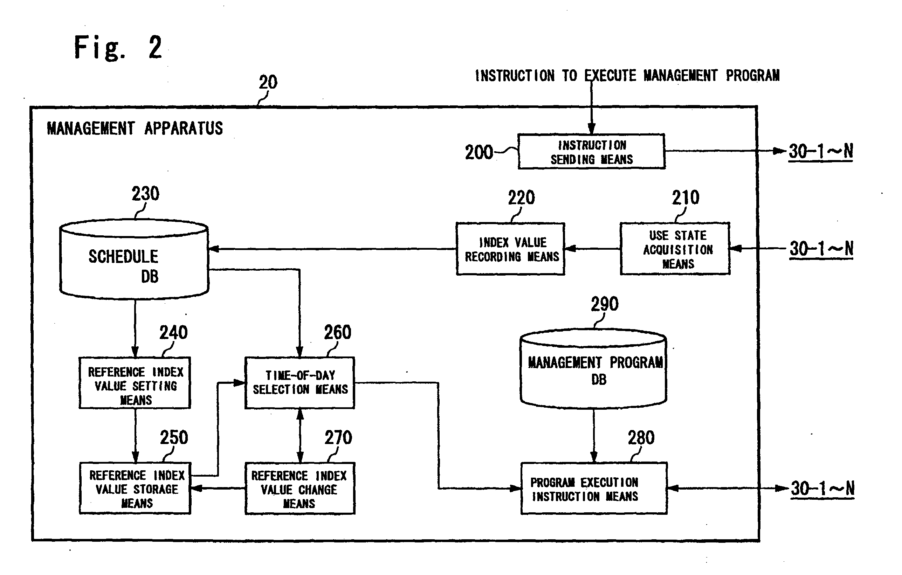

Figure 2 shows a block diagram of the management apparatus 20. The management apparatus 20 has instruction sending means 200, use state acquisition means 210, index value recording means 220, a schedule DB 230, reference index value setting means 240, reference index value storage means 250, time band selection means 260, reference index value change means 270, program execution instruction means 280 and a management program DB 290.

When execution of a management program is instructed by a user of the management apparatus 20, the instruction sending means 200 sends a sending instruction for causing the use state of the information processing apparatus 30-1 to be sent to the management apparatus 20, to the information processing apparatus 30-1. The instruction sending means 200 also sends the sending instruction to each of the information processing apparatuses 30-2 to 30-N similarly. Since other processes performed by the management apparatus 20 for the information processing apparatus 30-1 are almost the same as those performed for each of the information processing apparatuses 30-2 to 30-N, description about each of the information processing apparatuses 30-2 to 30-N will be omitted.

The use state acquisition means 210 acquires a use state of the information processing apparatus 30-1 from the information processing apparatus 30-1 as a response to the sending instruction. Specifically, the use state acquisition means 210 acquires a system use rate indicating the ratio of actual throughput of the information processing apparatus 30-1 to the maximum throughput per unit time of the information processing apparatus 30-1, from the information processing apparatus 30-1 as the use state. The use state acquisition means 210 further acquires a use frequency indicating the frequency of use of an input device of the information processing apparatus 30-1, from the information processing apparatus 30-1 as the use state. The use state acquisition means 210 also acquires an operation state indicating whether or not the information processing apparatus 30-1 is currently operating, from the information processing apparatus 30-1 as the use state.

Here, the system use rate is, for example, the use rate of the central processing unit of the information processing apparatus 30-1, the use rate of the main memory of the information processing apparatus 30-1, the amount of use of a page file of the information processing apparatus 30-1, the frequency of access to the hard disk drive of the information processing apparatus 30-1 or combination thereof. The input device use frequency may be, for example, the frequency of moving a pointer by a mouse, the amount of movement of the pointer or the frequency of typing a key of a keyboard. The use state acquisition means 210 may acquire information about whether a screen saver has been activated or not or the frequency of the activation as information indicating the use frequency instead of acquiring the use frequency itself.

Then, the use state acquisition means 210 quantifies the acquired use state into an index value indicating availability of the information processing apparatus 30-1. Specifically, the use state acquisition means 210 quantifies the acquired use state into such an index value as is lower when the system use rate is higher than when the system use rate is lower, lower when the input device use frequency is higher than when the use frequency is lower, and higher when the operation probability of the information processing apparatus 30-1 is higher than when the operation probability is lower. As an example, the use state acquisition means 210 may calculate the index value in accordance with the following formula with the use of a busy rate, which is a value between 0 and 1 and takes a higher value when the system use rate and the use frequency are higher than when they are lower.

$$\text{Index value} = \text{operation probability} \times (1 \text{-busy rate})$$

Instead, the use state acquisition means 210 may use the operation probability itself as the index value or may use a value obtained by subtracting the system use rate from 1 as the index value. Alternatively, it may user a value obtained by subtracting the use frequency from a predetermined reference frequency as the index value.

The means 220 stores the index value quantified by the use state acquisition means 210 in the schedule DB 230 for each time band. The reference index value setting means 240 sets a predetermined threshold (for example, 1) for the above index value as a reference index value and stores it in the reference index value storage means 250. As described later, this reference index value can be changed. The reference index value storage means 250 may store the reference index value, for example, for each of the managed information processing apparatuses.

The time band selection means 260 selects a time band where the past index value stored by the index value recording means 220 indicates that the information processing apparatus 30-1 had not been used at and above a predetermined reference rate, as a scheduled time band where the management program for managing the information processing apparatus 30-1 is to be executed. For example, the time band selection means 260 selects a time band where the index value recorded by the index value recording means 220 is equal to or above the reference index value stored in the reference index value storage means 250. In the case where the reference index value storage means 250 stores a reference index value for each information processing apparatus, the time band selection means 260 selects a reference index value for an information processing apparatus on which the management program is to be executed, from the reference index value storage means 250, and selects a time band where the index value recorded by the index value recording means 220 is equal to or above the selected reference index value as the scheduled time band.

When the number of information processing apparatuses for which the same scheduled time band is selected by the time band selection means 260 reaches a predetermined upper limit, then the reference index value change means 270 reduces the reference index value stored in the reference index value storage means 250 and causes the time band selection means 260 to reselect a scheduled time band. The program execution instruction means 280 acquires the management program stored in the management program DB 290 and causes the information processing apparatus 30-1 to execute it at the scheduled time band selected by the time band selection means 260. Prior to the execution, the program execution instruction means 280 may notify the information processing apparatus 30-1 that the management program is to be executed. In this case, the program execution instruction means 280 starts execution of the management program unless it receives an unpermission instruction indicating that execution is not permitted, from the information processing apparatus 30-1 within a predetermined period.

The management program stored in the management program DB 290 may be, for example, a program for installing a new application program, a program for adding or modifying a function of an application program already installed, or a program for detecting/removing a computer virus which has intruded into an information processing apparatus. Though such a management program is capable of operating in parallel with other programs in an information processing apparatus, it may sometimes decrease the operation speed of the other programs or require re-activation of the information processing apparatus. The management apparatus 20 according to this embodiment can select a time band appropriate for execution of such a management program.

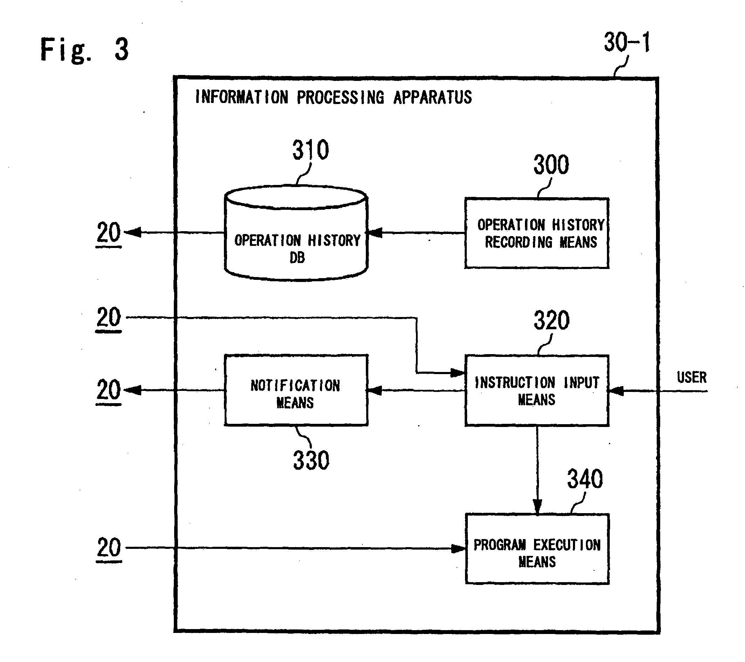

Figure 3 shows a block diagram of the information processing apparatus 30-1. The information processing apparatus 30-1 has operation history recording means 300, an operation history DB 310, instruction input means 320, notification means 330 and program execution means 340. Since each of the information processing apparatuses 30-2 to 30-N has almost the same configuration as the information processing apparatus 30-1, description thereof will be omitted. The operation history recording means 300 records an operation state by periodically recording information to the effect that the information processing apparatus 30-1 is operating in the operation history DB 310 in association with the time at which the information processing apparatus 30-1 is operating. The operation history recording means 300 also detects the system use rate and the input frequency of the information processing apparatus 30-1 and stores them in the operation history DB 310 in association with the time of the detection.

When receiving a sending instruction from the instruction sending means 200 , the operation history DB 310 sends information indicating the operation state, the system use rate and the input frequency to the management apparatus 20. When receiving a notification to the effect that the management program is to be executed, from the management apparatus 20, the instruction input means 320 causes the user of the information processing apparatus 30-1 to input an unpermission instruction indicating that the program execution instruction means 280 is not permitted to cause the management program to be executed. For example, the instruction input means 320 may display to the user an input screen for prompting the user to input whether or not execution of the management program may be started.

Then, if the unpermission instruction is inputted, the notification means 330 sends an unpermission notification to the effect that execution of the management program is not permitted, to the management apparatus 20. On the other hand, if the unpermission instruction is not inputted within a predetermined input period, the program execution means 340 starts execution of the management program received from the management apparatus 20.

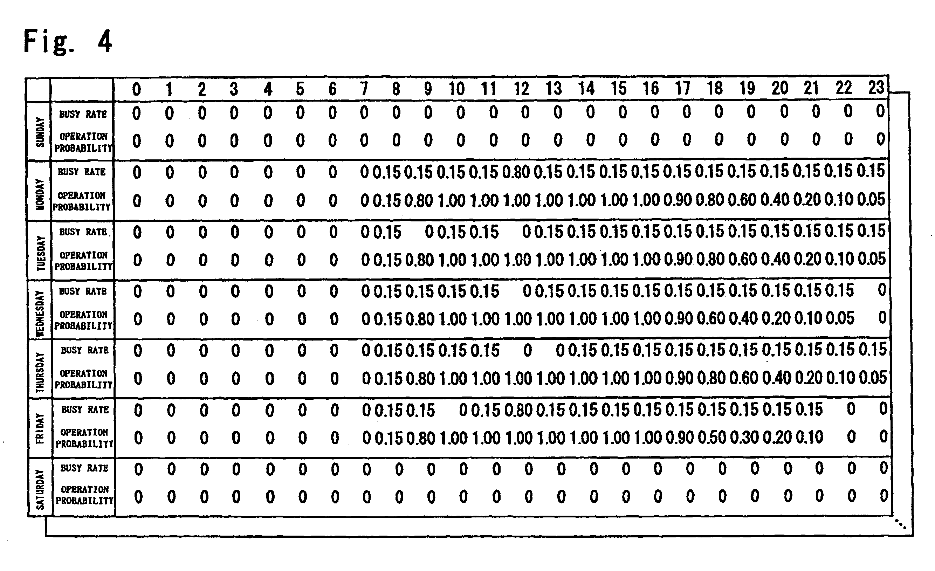

Figure 4 is a diagram for illustrating a use state acquired by the use state acquisition means 210. The use state acquisition means 210 acquires a system use rate, an input device use frequency and an operation state from the information processing apparatus 30-1 as the use state. This figure shows a busy rate determined based on the system use rate and the use frequency acquired by the use state acquisition means 210, and an operation probability determined based on the operation state acquired by the use state acquisition means 210, for each time band for each day of the week. For example, the use state acquisition means 210 acquires such a use state that the busy rate of the information processing apparatus 30-1 shows 0.15 and the operation probability shows 1 at the one-hour time band from ten o'clock on Monday. Since the outline of the use state to be acquired by the use state acquisition means 210 for the information processing apparatuses 30-2 to 30-N is almost the same as that for the information processing apparatus 30-1, description thereof will be omitted.

Here, the operation probability is a probability that the information processing apparatus 30-1 is operating. For example, the operation probability may be a probability that the information processing apparatus 30-1 is powered on, a probability that the central processing unit of the information processing apparatus 30-1 is ready to execute a command, or a probability that the information processing apparatus 30-1 is ready to communicate with the outside. Alternatively, the operation probability may be a probability that the information processing apparatus 30-1 is operating within a range where communication from the management apparatus 20 is possible via a network. For example, when the information processing apparatus 30-1 is operating as a stand-alone, it may be treated as not being operating.

The use state acquisition means 210 calculates the operation probability, for example, in accordance with the following procedure. The use state acquisition means 210 acquires, from the operation history recording means 300, the operation state in which operation instruction log information indicating that the information processing apparatus 30-1 is operating is associated with the time when the information processing apparatus 30-1 is operating. Next, the use state acquisition means 210 classifies each of multiple pieces of operation instruction log information according to the time band to which the time associated with the operation instruction log information belongs. Then, the use state acquisition means 210 calculates the ratio of the number of pieces of operation instruction log information classified under each time band to the maximum number of pieces of operation instruction log information that can be recorded at the time band, as the operation probability. As an example, when the operation history recording means 300 records operation instruction log information every fifteen minutes, the maximum number of pieces of operation instruction log information that can be recorded at a one-hour time band is four. In this case, if the number of pieces of operation instruction log information classified under the time band is three, then the use state acquisition means 210 calculates an operation probability as 0.75 by dividing three by four.

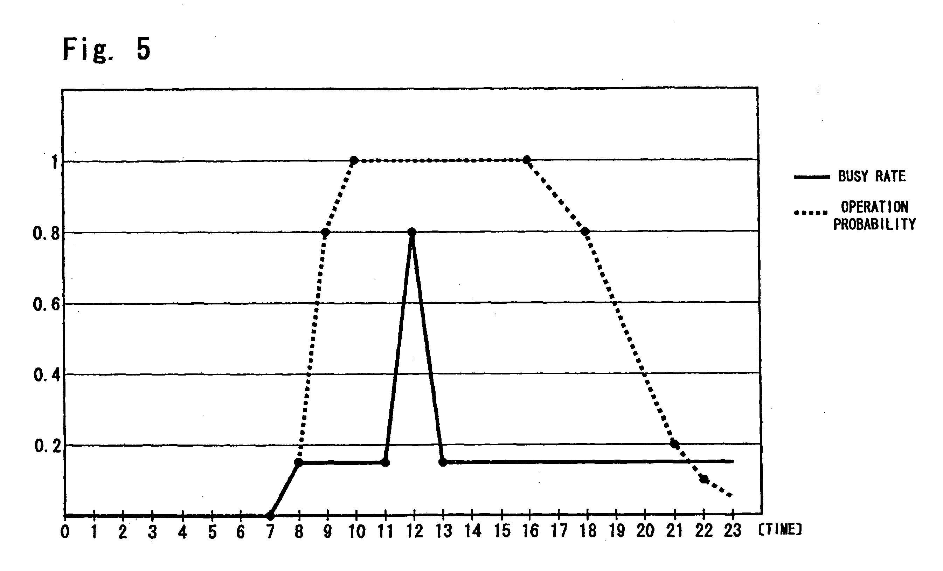

Figure 5 is a graph showing a use state acquired by the use state acquisition means 210. The continuous line indicates the busy rate of the information processing apparatus 30-1 at each time band on Monday. The dotted line shows the operation probability of the information processing apparatus 30-1 at each time band on Monday. In order to cause the management program to be executed on the information processing apparatus 30-1, it is premised that the information processing apparatus 30-1 is operating. Therefore, it is desirable that the management apparatus 20 causes the management program to be executed at a time band where the operation probability of the information processing apparatus 30-1 is high. In the example of this figure, the operation probability is high at the time band from about nine o'clock to eighteen o'clock, and the possibility that the management program can be executed is high at this time band.

However, if the management program is executed without exception when the operation probability is higher than the reference probability, it may interfere with the work of the user of the information processing apparatus 30-1 when the busy rate of the information processing apparatus 30-1 is equal to or above a predetermined level. For example, in the example of this figure, the busy rate is high at the time band from about eleven o'clock to about thirteen o'clock, and it is desirable to avoid execution of the management program at this time band. In order to respond to these requests, the management apparatus 20 according to this embodiment selects a time band where the operation probability is high to some extent and the work of the user is not interfered with, as a scheduled time band where the management program is to be executed, based on the busy rate and the operation probability stored in the schedule DB 230.

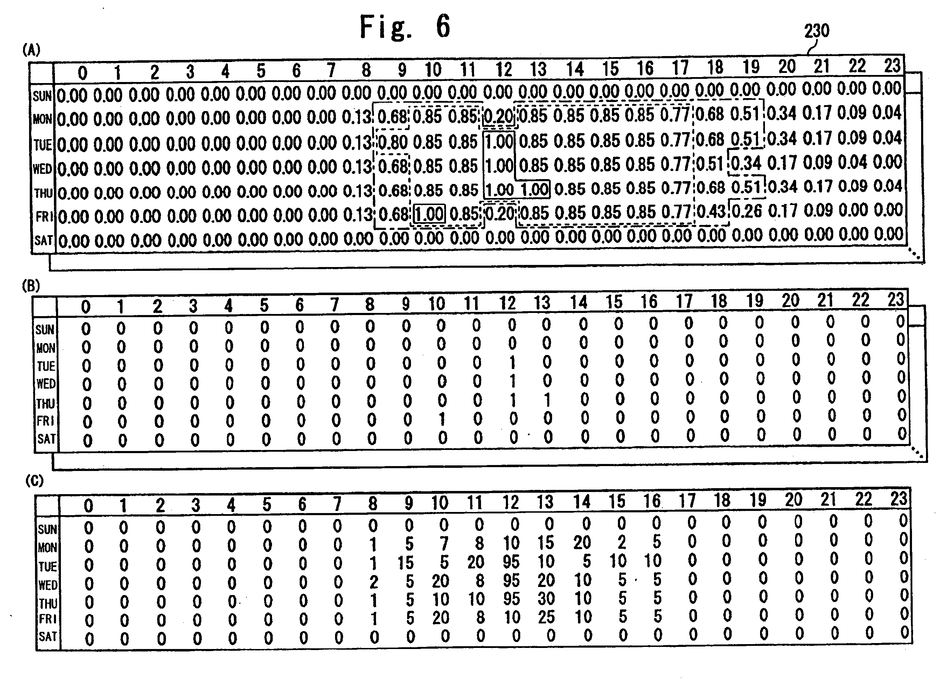

Figure 6(A) shows an example of the data structure of an index value stored in the schedule DB 230. The use state acquisition means 210 calculates an index value for each of the information processing apparatuses 30-1 to 30-N, for each time band of each day of the week, in accordance with the formula below.

$$\text{index value} = \text{operation probability} \times (1 - \text{busy rate})$$

For example, the use state acquisition means 210 acquires a use state indicating that the busy rate of the information processing apparatus 30-1 is 0.15 and the operation probability of the information processing apparatus 30-1 is 0.80 at the one-hour time band from nine o'clock on Monday, as shown in Figure 4. Accordingly, the use state acquisition means 210 calculates an index value as 0.68 by multiplying the operation probability 0.80 by 0.85 obtained by subtracting the busy rate 0.15 from 1.

In this figure, time bands where the index value shows the maximum value 1 are indicated with continuous lines. These time bands are such that are the most preferable for execution of the management program. Time bands where the index value is 0.7 or above are indicated with dotted lines. These time bands are such that are the second most preferable for execution of the management program. Time bands where the index value is 0.4 or above are indicated with dashed lines.

In the example of this figure, the schedule DB 230 stores an index value for each time band for each day of the week. Instead, the schedule DB 230 may store an index value for each time band irrespective of the day of the week or may store an index value for each time band for a weekday and for a holiday separately.

Figures 6(B) and 6(C) are diagrams for illustrating a concrete example of the processing performed by the time band selection means 260. The time band selection means 260 selects a time band where a past index value stored in the schedule DB 230 is equal to or above the reference index value stored in the reference index value storage means 250, as a scheduled time band where the management program for managing the information processing apparatus 30-1 is to be executed. In Figure 6(B), a time band which can be selected by the time band selection means 260 as the scheduled time band is denoted by 1. That is, if the reference index value is 1, the time band selection means 260 can select one hour from twelve o'clock on Tuesday to Thursday, one hour from thirteen o'clock on Thursday or one hour from ten o'clock on Friday, as the scheduled time band.

As shown in Figure 6(C), the time band selection means 260 calculates the number of information processing apparatuses the index value of which is equal to or above the reference index value, for each time band for each day of the week, by summing up data in which a selectable scheduled time band is denoted by 1 for each information processing apparatus for each day of the week. Then, the time band selection means 260 preferentially selects, for each of the multiple information processing apparatuses, a time band where there are fewer other information processing apparatuses with an index value above the reference index value, from among time bands where the index value is equal to or above the reference index value, as a scheduled time band of the information processing apparatus.

For example, at the time bands of one hour from twelve o' clock on Tuesday, one hour from twelve o' clock on Wednesday, one hour from twelve o'clock on Thursday, one hour from thirteen o'clock on Thursday and one hour from ten o'clock on Friday which can be selected as a scheduled time band in the information processing apparatus 30-1, the numbers of information processing apparatuses the index value of which is equal to or above the reference index value are 95, 95, 95, 30 and 20, respectively. Accordingly, the time band selection means 260 preferentially selects the one hour from ten o'clock on Friday as the scheduled time band.

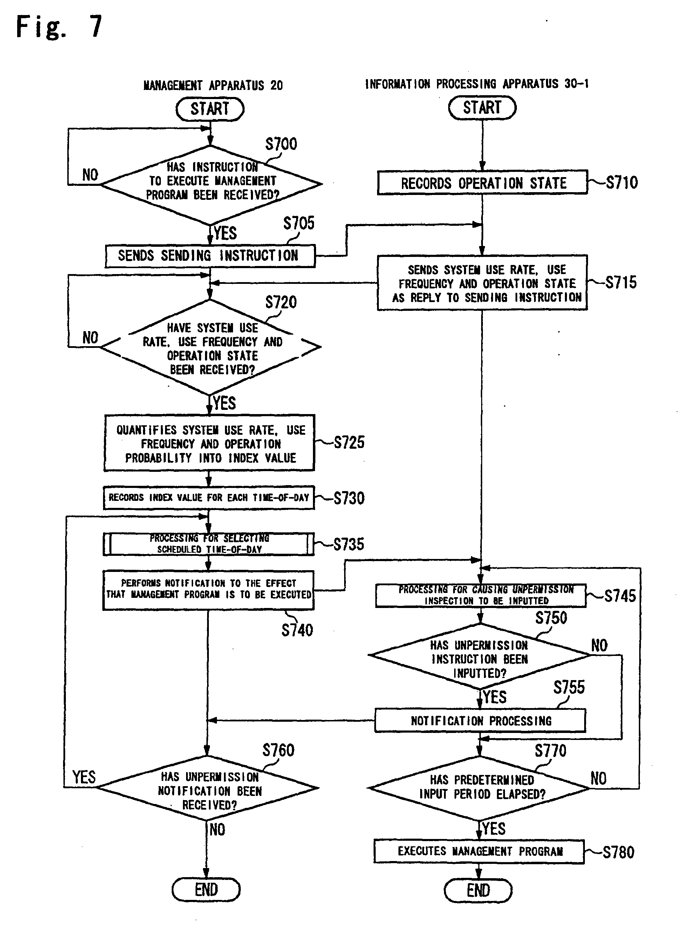

Figure 7 shows the operational flow of processing performed by the management apparatus 20 to cause the information processing apparatus 30-1 to execute the management program. When execution of the management program is instructed by the user of the management apparatus 20 (S700: YES), the instruction sending means 200 sends to the information processing apparatus 30-1 a sending instruction for causing the use state of the information processing apparatus 30-1, for example, the system use rate, the use frequency and the operation probability to be sent to the management apparatus 20 (S705).

The operation history recording means 300 records the operation state by periodically recording information to the effect that the information processing apparatus 30-1 is operating to the operation history DB 310 in association with the time when the information processing apparatus 30-1 is operating (S710). The operation history recording means 300 also detects the system use rate and the input frequency of the information processing apparatus 30-1 and stores them in association with the time of the detection.

When receiving the sending instruction from the management apparatus 20, the operation history DB 310 sends information indicating the operation state, the system use rate and the input frequency to the management apparatus 20 as a reply to the sending instruction (S715). When receiving each of the system use rate, the use frequency and the operation state (S720: YES), the use state acquisition means 210 quantifies the system use rate, the use frequency and the operation state into an index value (S725).

The schedule DB 230 records the index value of the information processing apparatus 30-1 for each time band (S730). The time band selection means 260 performs processing for selecting a scheduled time band where execution of the management program for managing the information processing apparatus 30-1 is scheduled, based on the index value (S735). The details will be described later. Subsequently, the program execution instruction means 280 notifies the information processing apparatus 30-1 to the effect that the management program is to be executed (S740).

When receiving the notification to the effect that the management program is to be executed, from the management apparatus 20, the instruction input means 320 causes the user of the information processing apparatus 30-1 to input an unpermission instruction indicating that the program execution instruction means 280 is not permitted to cause the management program to be executed (S745). For example, the instruction input means 320 may display to the user an input screen for prompting the user to input whether or not execution of the management program may be started.

Then, if an unpermission instruction is inputted (S750), the notification means 330 sends an unpermission notification to the effect that execution of the management program is not permitted, to the management apparatus 20. When receiving the unpermission notification (S760: YES), the program execution instruction means 280 returns the processing to S735 to cause the time band selection means 260 to reselect another time band as a scheduled time band. On the other hand, if a predetermined input period has elapsed without the unpermission instruction being inputted (S770: YES), then the program execution means 340 starts execution of the management program (S780). That is, the program execution instruction means 280 can cause execution of the management program to be started if the unpermission instruction has not been inputted within a predetermined input period.

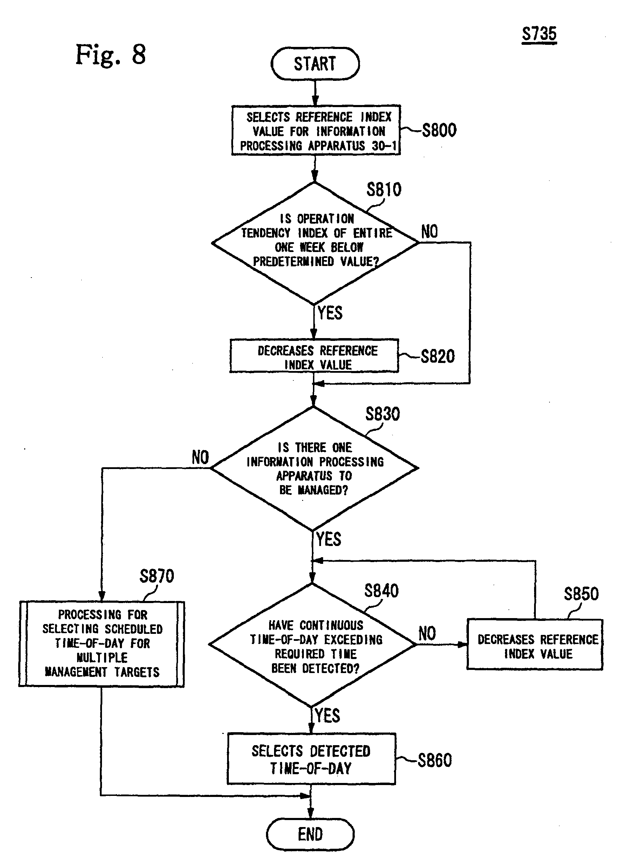

Figure 8 shows the details of the processing at S735 in Figure 7. The time band selection means 260 selects a reference index value for the information processing apparatus 30-1 on which the management program is to be executed (S800). If an operation tendency index, which is the probability of being operating at predetermined multiple time bands, for example, the probability of operating through one entire week is lower than a predetermined value (S810: YES), then the reference index value setting means 240 decreases the reference index value stored in the reference index value storage means 250 (S820). Thereby, even for such an information processing apparatus that the probability of operating through one entire week is extremely low, a scheduled time band where the management program is to be executed can be quickly and appropriately selected.

In the case where there are multiple information processing apparatuses to be managed (S830: NO), the management apparatus 20 performs the processing for selecting a scheduled time band for the multiple targets to be managed (S870). The case where there are multiple information processing apparatuses to be managed means, for example, the case where it is required to execute a management program for modifying an application program used in multiple information processing apparatuses. The details of the processing will be described later.

On the other hand, in the case where there is one information processing apparatus to be managed (S830: YES), if detecting continuous time bands where the index value is equal to or above the reference index value and which exceed the time required for execution of the management program (S840: YES), then the time band selection means 260 selects the detected time bands as the scheduled time band (S860).

On the other hand, if such continuous time bands exceeding the required time cannot be detected (S840: NO), then the reference index value change means 270 decreases the reference index value stored in the reference index value storage means 250 (S850) and returns the processing to S840.

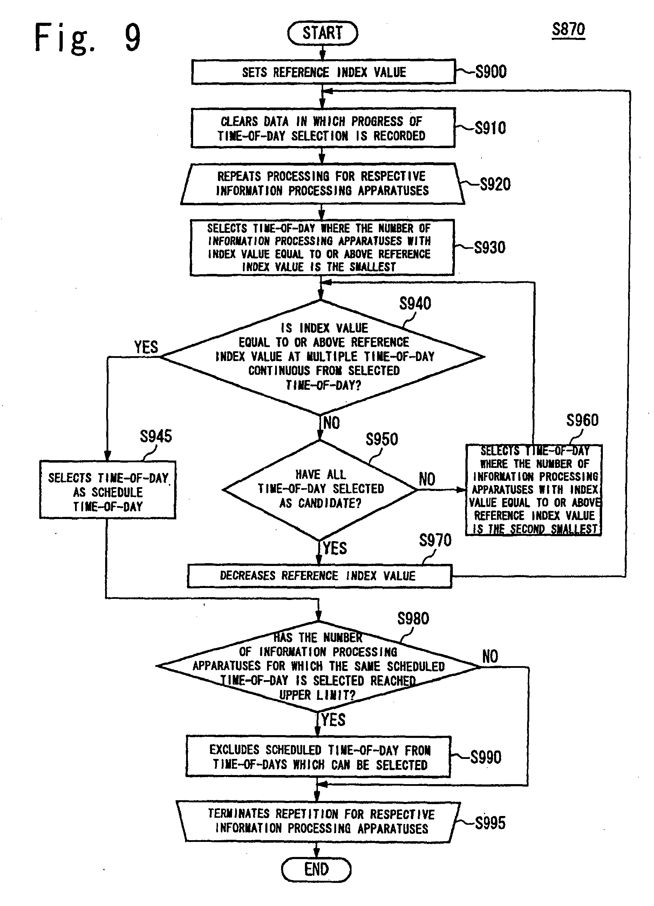

Figure 9 shows the details of the processing at S870 in Figure 8. The time band selection means 260 sets the reference index value, which is used for comparison with an index value, to a value acquired from the reference index value storage means 250 (S900). The time band selection means 260 clears, for each of the information processing apparatuses 30-1 to 30-N, the content of a data area for recording the progress of selecting a scheduled time band (S910). The time band selection means 260 sequentially performs the following processing for each of the information processing apparatuses 30-1 to 30-N (S920).

The time band selection means 260 selects a time band where the number of information processing apparatuses with an index value equal to or above the reference index value is the smallest, as a candidate time band to be a candidate for a scheduled time band (S930). The time band selection means 260 determines whether or not the index value of the information processing apparatus is equal to or above the reference index value at multiple time bands which are continuous from the candidate time band and exceed the time required for execution of the management program (S940). If the index value is smaller than the reference index value (S940: NO), then the time band selection means 260 determines whether or not all the time bands have been selected as a candidate time band (S950).

In the case where there is a time band which has not been selected as a candidate time band (S950: NO), the time band selection means 260 selects a time band where the number of information processing apparatuses with an index value equal to or above the reference index value is the second smallest (S960), and returns the processing to S940. On the other hand, in the case where all the time bands have been selected as a candidate time band (S950: YES), then the reference index value change means 270 decreases the set reference index value (S970) and returns the processing to S910.

Here, the case where all the time bands have been selected as a candidate time band at S950 means the case where the time bands with an index value equal to or above the reference index value, longer than the time required for the management program, cannot be selected, or the case where the number of information processing apparatuses on which the management program is to be executed at the same scheduled time band reaches the upper limit. That is, if a time band with an index value equal to or above the reference index value, longer than the time required for the management program cannot be selected, or if the number of information processing apparatuses on which the management program is to be executed at the same scheduled time band reaches the upper limit, then the reference index value change means 270 reduces the reference index value and causes the time band selection means 260 to reselect a scheduled time band.

Subsequently, if the number of information processing apparatuses for which the same scheduled time band is selected reaches a predetermined upper limit (S980: YES), then the time band selection means 260 excludes the scheduled time band from those to be selected (S990). The time band selection means 260 repeats the above processing for the respective information processing apparatuses (S995).

As described above, as shown in this figure, if there are multiple information processing apparatuses to be managed, the time band selection means 260 preferentially selects a time band where the number of information processing apparatuses which execute the management program at the same time band is smaller, as a scheduled time band, under the condition that the number of information processing apparatuses which execute the management program at the same time band should not be above the upper limit. Thereby, it is possible to keep network traffic, which is increased by sending the management program itself or data required for execution of the management program, below a predetermined level. Furthermore, it is also possible to prevent interference with a user's work as much as possible and to select a time band where the operation probability of the information processing apparatus is high.

The procedure shown in this figure is only an example, and various modification can be made thereto. For example, at S900, the time band selection means 260 sets a reference index value to be compared with an index value to a value acquired from the reference index value storage means 250. However, instead of this, the time band selection means 260 may set the reference index value to 1, which is the maximum value the index value can take. In this case, time bands can be sequentially selected as a candidate for a scheduled time band by starting from the most appropriate time band.

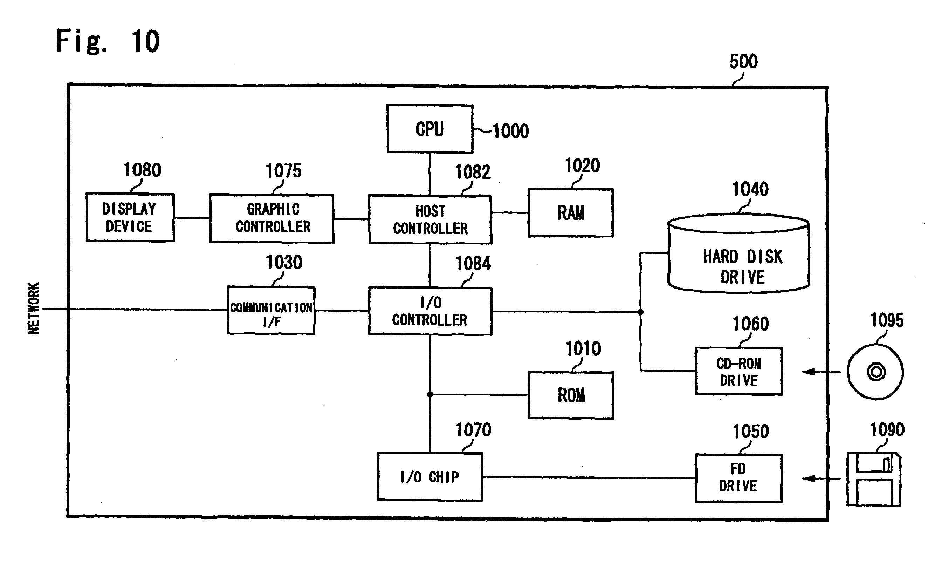

Figure 10 shows an example of the hardware configuration of a computer 500 which functions as the management apparatus 20 or the information processing apparatuses 30-1 to 30-N. The computer 500 is provided with a CPU peripheral part having a CPU 1000, a RAM 1020, a graphic controller 1075, and a display device 1080 which are mutually connected via a host controller 1082; an input/output part having a communication interface (I/F) 1030, a hard disk drive 1040 and a CD-ROM drive 1060 which are connected to the host controller 1082 via an input/output controller 1084; and a legacy input/output part having a ROM 1010, a flexible disk (FD) drive 1050 and an input/output chip 1070 which are connected to the input/output controller (I/O) 1084.

The CD-ROM drive 1060 reads a program or data from a CD-ROM 1095, and the flexible drive 1050 exchanges a program or data with a flexible disk 1090. The communication interface 1030 communicates with external devices via a network such as an Ethernet (registered trademark) network. The ROM 1010 stores a boot program, which is executed by the CPU 1000 when the computer 500 is activated, and programs dependent on the hardware of the computer 500. The input/output chip 1070 connects various input/output devices, for example, via a parallel port, a serial port, a keyboard port, a mouse port or the like, in addition to the flexible disk 1090.

Since the configuration of the above computer 500 is already well known, the details of each component thereof will be omitted.

The program to be installed and executed on the computer 500 which functions as the management apparatus 20 includes an instruction sending module, a use state acquisition module, an index value recording module, a reference index value setting module, a time band selection module, a reference index value change module and a program execution instruction module. This program may use the hard disk drive 1040 as the schedule DB 230, the reference index value storage means 250 or the management program DB 290.

The computer 500 may read the program to be executed on the information processing apparatuses 30-1 to 30-N from a recording medium via the input/output chip 1070 or the input/output controller 1084, provide it for the information processing apparatuses 30-1 to 30-N from the communication interface 1030 via a network, and cause it to be executed by the information processors 30-1 to 30-N. The program to be provided for and executed on the information processing apparatuses 30-1 to 30-N includes an operation history recording module, an instruction input module, a notification module and a program execution module. This program may use the hard disk drive 1040 of the computer 500 which functions as the information processing apparatuses 30-1 to 30-N as the operation history DB 310. Since the operation which each module causes the management apparatus 20 or the information processing apparatuses 30-1 to 30-N to operate is the same as the operation of a corresponding member of the management apparatus 20 or the information processing apparatuses 30-1 to 30-N described through Figures 1 to 9, description thereof will be omitted.

The programs or modules described above may be stored in an external storage medium. As the recording medium, an optical recording medium such as a DVD and a PD, a magneto-optical recording medium such as an MD, a tape medium, a semiconductor memory such as an IC card or the like can be used in addition to the flexible disk 1090 and the CD-ROM 1095. The programs may be provided for the computer 500 with the use of a storage device, such as a hard disk and a RAM, provided for a server system connected to a dedicated communication network or the Internet as a recording medium, via the network.

As shown in the embodiment described above, the management apparatus 20 records, for each of at least one information processing apparatus, the system use rate, the input device use frequency and the operation probability in the past for each time band. Then, the management apparatus 20 selects a time band where the operation probability is equal to or above a predetermined level and the system use rate is equal to or below a predetermined level, as a time band where the management program is to be executed on a day different from the data when the use rate and the other values were recorded, based on the recorded information. Thereby, it is possible for the administrator of the management apparatus 20 to avoid such a situation that execution of the management program must be attempted many times because the information processing apparatuses 30-1 to 30-N are not operating and quickly complete the execution of the management program. It is also possible to prevent the execution of the management program from interfering with the work of the users of the information processing apparatuses 30-1 to 30-N.

Furthermore, when there are multiple information processing apparatuses to be managed, the time band selection means 260 preferentially selects a time band where the number of information processing apparatuses executing the management program at the same time band is smaller, as a scheduled time band. Thereby, it is possible to avoid such a situation that the management program is redundantly executed at a particular time band and reduce network traffic.

**Claims**

1.  A management apparatus for managing at least one information processing apparatus, the management apparatus (20) comprising:

    i) use state acquisition means (210) for acquiring a use state of the information processing apparatus (30-1,30-N) and quantifying the acquired use state into an index value indicating availability of the information processing apparatus;
    ii) index value recording means (220) for recording the availability index value for each time band or time-of-day;
    **characterized by**:
    iii) the use state acquisition means (210) acquiring:

       a) a system use rate indicating the ratio of actual throughput of the information processing apparatus (30-1,30-N) to the maximum throughput per unit time of the information processing apparatus from the information processing apparatus as the use state, and quantifies the acquired system use rate into the index value which is lower when the system use rate is higher than when the system use rate is lower; and/or,
       b) a use frequency, a frequency of use of an input device of the information processing apparatus from the information processing apparatus as the use state, and quantifies the acquired use frequency into the index value which is lower when the use frequency is higher than when the use frequency is lower; and/or,
       c) an operation state indicating whether the information processing apparatus is operating or not from the information processing apparatus as the use state, and quantifies the acquired operation state into the index value which is lower when an operation probability, a probability that the information processing apparatus is operating, is higher than when the operation probability is lower;

       iv) a schedule database (230) arranged to store the index value quantified by the use state acquisition means for each time band or time-of-day;
       v) time band or time-of-day selection means (260) for selecting a time band or time-of-day where the recorded availability index value is equal to or above a predetermined reference index value determined by the recorded availability index value in advance as a time band or time-of-day indicating that the information processing apparatus has not been used at or above a predetermined reference rate, as a scheduled time band or time-of-day where execution of a management program on the information processing apparatus is scheduled; and,
       vi) program execution instruction means (280) for causing the management program to be executed on the information processing apparatus at the scheduled time band or time-of-day selected by the time band or time-of-day selection means.

2.  The management apparatus according to claim 1, further comprising reference index value setting means (240) which sets a predetermined threshold for the availability index value as a reference index value and stores it in reference index value storage means (250).

3.  The management apparatus according to claim 2, further comprising:

    i) the reference index value setting means (240) setting a lower reference index value when an operation tendency index, which is the operation probability at predetermined multiple time band or time-of-day, is lower than when the operation tendency index is higher, as the reference index value; and,
    ii) wherein the time band or time-of-day selection means (260) selects a reference index value for the information processing apparatus (30-1, how 30-N) where the operation probability quantified by the use state acquisition means (210) into the index value is higher than the reference index value set by the reference index value setting means.

4. The management apparatus according to claim 2, further comprising:

   i) the reference index value storage means (250) stores the reference index value for each of the managed information processing apparatuses (30-1,30-N));
   and,
   ii) wherein the time band or time-of-day selection means (260) selects the reference index value for an information processing apparatus on which the management program is to be executed, from the reference index value storage means, and selects a time band or time-of-day where the index value is equal to or above the selected reference index value.

5. The management apparatus according to claim 2, wherein

   i) the use state acquisition means (210) acquires the use state of each of the multiple information processing apparatuses (30-1,30-N) and quantifies the acquired use states into availability index values;
   ii) the reference index value recording means (250) records the reference index value for each time band or time-of-day and for each information processing apparatus;
   and,
   iii) the time band or time-of-day selection means (260) preferentially selects, for each of the multiple information processing apparatuses , a time band or time-of-day where there are fewer other information processing apparatuses with an availability index value equal to or above the reference index value, from among time band or time-of-days where the availability index value of the information processing apparatus is equal to or above the reference index value, as the scheduled time band or time-of-day for the information processing apparatus.

6. The management apparatus according to claim 2, wherein

   i) the use state acquisition means (210) acquires the use state from each of the multiple information processing apparatuses (30-1,30-N) and quantifies the acquired use states into availability index values;
   ii) the reference index value recording means (250) records the reference index value for each time band or time-of-day and for each information processing apparatus;
   iii) the time band or time-of-day selection mans (260) selects, for each of the multiple information processing apparatuses, a time band or time-of-day where the availability index value of the information processing apparatus is equal to or above the reference index value, as the scheduled time band or time-of-day;
   and,
   iv) the management apparatus (20) further comprises reference index value change means (270) for when the number of information processing apparatuses for which the same schedule time band or time-of-day is selected by the time band or time-of-day selection means reaches a predetermined upper limit, decreasing the reference index value and causing the scheduled time band or time-of-day to be reselected.

7. The management apparatus according to claim 2 further comprising reference index value change means (270) for when the time band or time-of-day selection means (260) is not able to select multiple continuous time band or time-of-days the availability index value of which is equal to or above the reference index value and the length of which is longer than time required for execution of the management program, decreasing the reference index value and causing the scheduled time band or time-of-day to be reselected.

8. The management apparatus according to claim 1, further comprising:

   i) instruction sending means (200) for, when execution of the management program is instructed by a user of the management apparatus (30-1,30-N), sending a sending instruction to cause the use state to be sent to the management apparatus, to the information processing apparatus;
   and,
   ii) wherein the use state acquisition means (210) acquires the use state from the information processing apparatus as a response to the sending instruction.

9. A management system comprising management apparatus (20) as claimed in any of claims 1 to 8 and including program execution instruction means (280) and at least one information processing apparatus (30-1,30-N) comprising program execution means (340) for executing the management program based on an instruction from the program execution instruction means.

10. The management system according to claim 9, wherein the information processing apparatus (30-1,30-N) further comprises:

i) instruction input means (320) for causing a user of the information processing apparatus to input an unpermission instruction indicating that the program execution instruction means (280) is not permitted to cause the management program to be executed;
ii) notification means (330) for, when the unpermission instruction is inputted, sending an unpermission notification to the effect that execution of the management program is not permitted, to the management apparatus (20);
and,
iii) the time band or time-of-day selection means (260) selects, when receiving the unpermission notification from the notification means, another time band or time-of-day where the availability index value indicates that the information processing apparatus has not been used at or above the reference rate, as the scheduled time band or time-of-day.

11. The management system according to claim 10, wherein the program execution means (340) causes execution of the management program to start unless the unpermission instruction is inputted within a predetermined input period.

12. The management system according to claim 11, wherein

i) the information processing apparatus (30-1,30-N) further comprises operation history recording means (310) for recording an operation state by periodically recording information to the effect that the information processing apparatus is operating, in association with the time when the information processing apparatus is operating; and,
ii) the use state acquisition means (210) acquires the operation state recorded by the operation history recording means as the use state.

13. Computer readable program code for causing a computer system to function as a management system (20) as claimed in any of claims 10 to 12, when exeuted on said computer system.

14. A computer readable recording medium on which the program code according to claim 13 is recorded.

**Patentansprüche**

1. Verwaltungseinrichtung für die Verwaltung von wenigstens einer Informationsverarbeitungseinrichtung, wobei die Verwaltungseinrichtung (20) umfasst:

i) Hilfsmittel (210) zur Erfassung des Verwendungszustands, um einen Verwendungszustand der Informationsverarbeitungseinrichtung (30-1, 30-N) zu erfassen und den so erfassten Verwendungszustand zu einem Indexwert zu quantifizieren, welcher die Verfügbarkeit der Informationsverarbeitungseinrichtung anzeigt;
ii) Hilfsmittel (220) zur Aufzeichnung von Indexwerten, um den Verfügbarkeitsindexwert für das jeweilige Zeitfenster oder die jeweilige Uhrzeit aufzuzeichnen;
**dadurch gekennzeichnet, dass**
iii) das Hilfsmittel (210) zur Erfassung des Verwendungszustands

a) von der Informationsverarbeitungseinrichtung eine Systemverwendungsrate erfasst, welche das Verhältnis von tatsächlichem Durchsatz der Informationsverarbeitungseinrichtung (30-1, 30-N) zum maximalen Durchsatz pro Zeiteinheit der Informationsverarbeitungseinrichtung als den Verwendungszustand anzeigt, und die erfasste Systemverwendungsrate zum Indexiert quantifiziert, welcher kleiner ist, wenn die Systemverwendungsrate höher ist als in dem Fall, in welchem die Systemverwendungsrate kleiner ist; und/oder
b) von der Informationsverarbeitungseinrichtung eine Verwendungshäufigkeit, d.h. eine Häufigkeit der Verwendung einer Eingabevorrichtung der Informationsverarbeitungseinrichtung, als den Verwendungszustand erfasst, und die erfasste Verwendungshäufigkeit zum Indexiert quantifiziert, welcher kleiner ist, wenn die Verwendungshäufigkeit größer ist als in dem Fall, in welchem die Verwendungshäufigkeit kleiner ist; und/oder

c) von der Informationsverarbeitungseinrichtung einen Betriebszustand, welcher anzeigt, ob die Informationsverarbeitungseinrichtung in Betrieb ist oder nicht, als den Verwendungszustand erfasst, und den erfassten Betriebszustand zum Indexiert quantifiziert, welcher kleiner ist, wenn eine Betriebswahrscheinlichkeit, d.h. eine Wahrscheinlichkeit, dass die Informationsverarbeitungseinrichtung in Betrieb ist, größer ist als in dem Fall, in welchem die Betriebswahrscheinlichkeit kleiner ist;

iv) eine Zeitplan-Datenbank (230), ausgelegt, um den Indexwert zu speichern, welcher durch das Hilfsmittel zur Erfassung des Verwendungszustands für das jeweilige Zeitfenster oder die jeweilige Uhrzeit quantifiziert worden ist;

v) Hilfsmittel (260) zur Auswahl des Zeitfensters oder der Uhrzeit, um ein Zeitfenster oder eine Uhrzeit auszuwählen, bei welcher der aufgezeichnete Verfügbarkeitsindexwert gleich oder größer ist als ein vorbestimmter Referenz-Indexwert, welcher vorab durch den aufgezeichneten Verfügbarkeitsindexwert als ein Zeitfenster oder eine Uhrzeit bestimmt wurde, anzeigend, dass die Informationsverarbeitungseinrichtung bei oder oberhalb einer vorbestimmten Referenzrate nicht verwender worden ist, als geplantes Zeitfenster oder Uhrzeit, bei welcher die Ausführung eines Verwaltungsprogramms auf der Informationsverarbeitungseinrichtung geplant ist; und

vi) Hilfsmittel (280) zur Abweisung der Programmausführung, um zu bewirken, dass das Verwaltungsprogramm auf der Informationsverarbeitungseinrichtung ausgeführt wird im geplanten Zeitfenster oder zur geplanten Uhrzeit, ausgewählt durch das Hilfsmittel zur Auswahl des Zeitfensters oder der Uhrzeit.

2. Verwaltungseinrichtung nach Anspruch 1, ferner umfassend Hilfsmittel (240) zum Setzen des Referenz-Indexwerts, welches eine vorbestimmte Schwelle für den Verfügbarkeitsindexwert als einen Referenz-Indexwert setzt und diesen in Speichermitteln (250) für Referenz-Indexwerte speichert.

3. Verwaltungseinrichtung nach Anspruch 2, ferner umfassend:

i) das Hilfsmittel (240) zum Setzen des Referenz-Indexwerts, welches einen kleineren Referenz-Indexwert als Referenz-Indexwert setzt, wenn ein Betriebstendenz-Index, der die Betriebswahrscheinlichkeit bei zuvor festgelegten mehreren Zeitfenstern oder Uhrzeiten darstellt, kleiner ist als in dem Fall, in welchem der Betriebstendenz-Index höher ist; und

ii) wobei das Hilfsmittel (260) zur Auswahl des Zeitfensters oder der Uhrzeit einen Referenz-Indexwert für die Informationsverarbeitungseinrichtung (30-1, 30-N) auswählt, gemäß welchem die durch das Hilfsmittel (210) zur Erfassung des Verwendungszustands zum Indexwert quantifizierte Betriebswahrscheinlichkeit größer ist als der Referenz-Indexwert, welcher durch das Hilfsmittel zum Setzen des Referenz-Indexwerts gesetzt wurde.

4. Verwaltungseinrichtung nach Anspruch 2, ferner umfassend:

i) dass das Hilfsmittel (250) zum Speichern des Referenz-Indexwerts den Referenz-Indexwert für jede der verwalteten Informationsverarbeitungseinrichtungen (30-1, 30-N) speichert; und

ii) wobei das Hilfsmittel (260) zur Auswahl des Zeitfensters oder der Uhrzeit aus dem Hilfsmittel zum Speichern des Referenz-Indexwerts den Referenz-Indexwert auswählt für eine Informationsverarbeitungseinrichtung, auf welcher das Verwaltungsprogramm ausgeführt werden soll, sowie ein Zeitfenster oder eine Uhrzeit auswählt, bei welcher der Indexiert gleich oder größer ist als der ausgewählte Referenz-Indexwert.

5. Verwaltungseinrichtung nach Anspruch 2, wobei

i) das Hilfsmittel (210) zur Erfassung des Verwendungszustands den Verwendungszustand von jeder der mehreren Informationsverarbeitungseinrichtungen (30-1, 30-N) erfasst und die erfassten Verwendungszustände zu Verfügbarkeitsindexwerten quantifiziert;

ii) das Hilfsmittel (250) zur Aufzeichnung des Referenz-Indexwerts den Referenz-Indexwert für jedes Zeitfenster oder jede Uhrzeit und für jede Informationsverarbeitungseinrichtung aufzeichnet; und

iii) das Hilfsmittel (260) zur Auswahl des Zeitfensters oder der Uhrzeit für jede der mehreren Informationsverarbeitungseinrichtungen vorzugsweise ein Zeitfenster oder eine Uhrzeit als das geplante Zeitfenster oder die geplante Uhrzeit für die Informationsverarbeitungseinrichtung auswählt, bei welcher es weiniger andere Informationsverarbeitungseinrichtungen gibt, die einen Verfügbarkeitsindexwert aufweise, welcher gleich oder größer ist als der Referenz-Indexwert, und zwar unter den Zeitfenstern oder den Uhrzeiten, bei denen der Verfügbarkeitsindexwert der Informationsverarbeitungseinrichtung gleich oder größer ist als der Referenz-Indexwert.

6. Verwaltungseinrichtung nach Anspruch 2, wobei

i) das Hilfsmittel (210) zur Erfassung des Verwendungszustands von jeder der mehreren Informationsverarbeitungseinrichtungen (30-1, 30-N) den Verwendungszustand erfasst und die erfassten Verwendungszustände zu Verfügbarkeitsindexwerten quantifiziert;

ii) das Hilfsmittel (250) zur Aufzeichnung des Referenz-Indexwerts den Referenz-Indexwert für jedes Zeitfenster oder jede Uhrzeit und für jede Informationsverarbeitungseinrichtung aufzeichnet;

iii) das Hilfsmittel (260) zur Auswahl des Zeitfensters oder der Uhrzeit für jede der mehreren Informationsverarbeitungseinrichtungen als das geplante Zeitfenster oder die geplante Uhrzeit ein Zeitfenster oder eine Uhrzeit auswählt, bei welcher der Verfügbarkeitsindexwert der Informationsverarbeitungseinrichtung gleich oder größer ist als der Referenz-Indexwert; und

iv) die Verwaltungseinrichtung (20) ferner Hilfsmittel (270) zur Änderung des Referenz-Indexwerts umfasst, um, wenn die Anzahl der Informationsverarbeitungseinrichtungen, für welche das gleiche Zeitfenster oder die gleiche Uhrzeit durch das Hilfsmittel zur Auswahl des Zeitfensters oder der Uhrzeit ausgewählt wurde, eine vorbestimmte obere Grenze erreicht, den Referenz-Indexwert zu verringern und zu bewirkten, dass das geplante Zeitfenster oder die geplante Uhrzeit erneut ausgewählt wird.

7. Verwaltungseinrichtung nach Anspruch 2, ferner umfassend Hilfsmittel (270) zur Änderung des Referenz-Indexwerts, um, wenn das Hilfsmittel (260) zur Auswahl des Zeitfensters oder der Uhrzeit nicht in der Lage ist, mehrere durchgehende Zeitfenster oder Uhrzeiten auszuwählen, deren Verfügbarkeitsindexwert gleich oder größer ist als der Referenz-Indexwert und deren Länge größer ist als die Zeit, welche für die Ausführung des Verwaltungsprogramms erforderlich ist, den Referenz-Indexwert zu verringern und zu bewirkten, dass das geplante Zeitfenster oder die geplante Uhrzeit erneut ausgewählt wird.

8. Verwaltungseinrichtung nach Anspruch 1, ferner umfassend:

i) Hilfsmittel (200) zum Senden von Anweisungen, um, wenn die Ausführung des Verwaltungsprogramms durch einen Anwender der Verwaltungseinrichtung (30-1, 30-N) angewiesen wird, an die Informationsverarbeitungseinrichtung eine Sendeanweisung zu senden, um zu bewirkten, dass der Anwendungszustand an die Verwaltungseinrichtung gesendet wird; und

ii) wobei das Hilfsmittel (210) zur Erfassung des Verwendungszustands von der Informationsverarbeitungseinrichtung den Verwendungszustand als eine Antwort auf die Sendeanweisung erhält.

9. Verwaltungssystem, umfassend die Verwaltungseinrichtung (20) nach einem der Ansprüche 1 bis 8 und einschließend Hilfsmittel (280) zur Abweisung der Programmausführung, sowie weinigstens eine Informationsverarbeitungseinrichtung (30-1, 30-N), umfassend Hilfsmittel (340) für die Ausführung des Verwaltungsprogramms, um das Verwaltungsprogramm auszuführen auf Grundlage einer Anweisung durch das Hilfsmittel zur Anweisung der Programmausführung.

10. Verwaltungssystem nach Anspruch 9, wobei die Informationsverarbeitungseinrichtung (30-1, 30-N) ferner umfasst:

i) Hilfsmittel (320) zur Eingabe von Anweisungen, um zu bewirkten, dass ein Anwender der Informationsverarbeitungseinrichtung eine Nichterlaubnis-Anweisung eingibt, welche anzeigt, dass das Hilfsmittel (280) zur Anweisung der Programmausführung nicht berechtigt ist, zu bewirkten, dass das Verwaltungsprogramm ausgeführt wird;

ii) Benachrichtigungshilfsmittel (330), um, wenn die Nichterlaubnis-Abweisung eingegeben worden ist, eine Nichterlaubnis-Benachrichtigung an die Verwaltungseinrichtung (20) zu senden, mit dem Inhalt, dass die Ausführung des Verwaltungsprogramms nicht erlaubt ist; und

iii) dass das Hilfsmittel (260) zur Auswahl des Zeitfensters oder der Uhrzeit, wenn dieses die Nichterlaubnis-Benachrichtigung vom Benachrichtigungshilfsmittel erhält, ein anderes Zeitfenster oder eine andere Uhrzeit als geplantes Zeitfenster oder als geplante Uhrzeit auswählt, bei welcher der Verfügbarkeitsindexwert anzeigt, dass die Informationsverarbeitungseinrichtung bei oder oberhalb der Referenzrate nicht verwender norden ist.

11. Verwaltungssystem nach Anspruch 10, wobei das Hilfsmittel (340) zur Programmausführung bewirkt, dass die Ausführung des Verwaltungsprogramms beginnt, es sei denn, die Nichterlaubnis-Anweisung ist innerhalb eines vorbestimmten Eingabezeitraums eingegeben worden.

**12.** Verwaltungssystem nach Anspruch 11, wobei

i) die Informationsverarbeitungseinrichtung (30-1, 30-N) ferner Hilfsmittel (310) zur Aufzeichnung des Betriebsverlaufs umfasst, um einen Betriebszustand aufzuzeichnen durch periodisches Aufzeichnen von Informationen mit dem Inhalt, dass sich die Informationsverarbeitungseinrichtung in Betrieb befindet, zusammen mit der Zeit, zu welcher die Informationsverarbeitungseinrichtung in Betrieb ist; und
ii) das Hilfsmittel (210) zur Erfassung des Verwendungszustands den durch das Hilfsmittel zur Aufzeichnung des Betriebsverlaufs aufgezeichneten Betriebszustand als Verwendungszustand erfasst.

**13.** Computer-lesbarer Programmcode, welcher bewirkt, dass ein Computer-System als ein Verwaltungssystem (20) nach einem der Ansprüche 10 bis 12 dient, wenn auf ebendiesem Computer-System ausgeführt.

**14.** Computer-lesbares Aufzeichnungsmedium, auf welchem der Programmcode nach Anspruch 13 aufgezeichnet ist.

## Revendications

**1.** Appareil de gestion pour gérer au moins un appareil de traitement d'informations, l'appareil de gestion (20) comprenant :

(i) des moyens d'acquisition de l'état d'utilisation (210) pour acquérir un état d'utilisation de l'appareil de traitement d'informations (30-1, 30-N) et quantifier l'état d'utilisation acquis dans une valeur d'indice indiquant la disponibilité de l'appareil de traitement d'informations ;
(ii) des moyens d'enregistrement de la valeur d'indice (220) pour enregistrer la valeur d'indice de disponibilité pour chaque bande de temps ou heure du jour ;
**caractérisé par** :
(iii) les moyens d'acquisition de l'état d'utilisation (210) acquérant :

a) un taux d'utilisation du système, indiquant le rapport entre le débit actuel de l'appareil de traitement d'informations (30-1, 30-N) et le débit maximal par unité de temps de l'appareil de traitement d'informations, provenant de l'appareil de traitement d'informations comme état d'utilisation, et quantifie le taux d'utilisation du système acquis dans la valeur d'indice qui est inférieure lorsque le taux d'utilisation du système est plus élevé que lorsque le taux d'utilisation du système est plus bas ;
et/ou
b) une fréquence d'utilisation, une fréquence d'utilisation d'un dispositif d'entrée de l'appareil de traitement d'informations, provenant de l'appareil de traitement d'informations comme état d'utilisation, et quantifie la fréquence d'utilisation acquise dans la valeur d'indice qui est inférieure lorsque la fréquence d'utilisation est plus élevée que lorsque la fréquence d'utilisation est plus basse ;
et/ou,
c) un état de fonctionnement, indiquant si l'appareil de traitement d'informations fonctionne ou non, provenant de l'appareil de traitement d'informations comme état d'utilisation, et quantifie l'état de fonctionnement acquis dans la valeur d'indice qui est inférieure lorsqu'une probabilité de fonctionnement, une probabilité que l'appareil de traitement d'informations fonctionne, est plus élevée que lorsque la probabilité de fonctionnement est plus basse ;

iv) un programme de base de données (230) agencé pour enregistrer la valeur d'indice quantifiée par les moyens d'acquisition de l'état d'utilisation pour chaque bande de temps ou heure du jour ;
v) des moyens de sélection d'une bande de temps ou heure du jour (260) pour sélectionner une bande de temps ou heure du jour où la valeur d'indice de disponibilité enregistrée est égale ou supérieure à une valeur d'indice de référence prédéterminée, déterminée par la valeur d'indice de disponibilité enregistrée à l'avance comme bande de temps ou heure du jour indiquant que l'appareil de traitement d'informations n'a pas été utilisé à ou au-dessus d'un taux de référence prédéterminé, comme bande de temps ou heure du jour programmée où l'exécution d'un programme de gestion sur l'appareil de traitement d'informations est programmée ;
et,

vi) des moyens d'instruction d'exécution du programme (280) pour entraîner l'exécution du programme de gestion sur l'appareil de traitement d'informations à la bande de temps ou heure du jour programmée, sélectionnée par les moyens de sélection d'une bande de temps ou heure du jour.

2. Appareil de gestion selon la revendication 1, comprenant en outre des moyens d'établissement de la valeur d'indice de référence (240) qui établit un seuil prédéterminé pour la valeur d'indice de disponibilité comme valeur d'indice de référence et l'enregistre dans des moyens d'enregistrement de la valeur d'indice de référence (250) .

3. Appareil de gestion selon la revendication 2, comprenant en outre :

i) les moyens d'établissement de la valeur d'indice de référence (240) établissant une valeur d'indice de référence inférieure lorsqu'un indice de tendance de fonctionnement, qui est la probabilité de fonctionnement à une bande de temps ou heure du jour multiple prédéterminée, sont plus bas que lorsque l'indice de tendance de fonctionnement est plus élevé, comme valeur d'indice de référence ;
et,
ii) dans lequel les moyens de sélection d'une bande de temps ou heure du jour (260) sélectionnent une valeur d'indice de référence pour l'appareil de traitement d'informations (30-1, 30-N) où la probabilité de fonctionnement quantifiée par les moyens d'acquisition de l'état d'utilisation (210) dans la valeur d'indice est supérieure à la valeur d'indice de référence établie par les moyens d'établissement de la valeur d'indice de référence.

4. Appareil de gestion selon la revendication 2, comprenant en outre :

i) les moyens d'enregistrement de la valeur d'indice de référence (250) enregistrent la valeur d'indice de référence pour chacun des appareils de traitement d'informations gérées (30-1, 30-N)) ;
et,
(ii) dans lequel les moyens de sélection d'une bande de temps ou heure du jour (260) sélectionnent la valeur d'indice de référence pour un appareil de traitement d'informations sur lequel le programme de gestion doit être exécuté, à partir des moyens d'enregistrement de la valeur d'indice, et sélectionnent une bande de temps ou heure du jour où la valeur d'indice est égale ou supérieure à la valeur d'indice de référence sélectionnée.

5. Appareil de gestion selon la revendication 2, dans lequel

i) les moyens d'acquisition de l'état d'utilisation (210) acquièrent l'état d'utilisation de chacun des appareils de traitement d'informations multiples (30-1, 30-N) et quantifient les états d'utilisation acquis en valeurs d'indice de disponibilité ;
ii) les moyens d'enregistrement de la valeur d'indice de référence (250) enregistrent la valeur d'indice de référence pour chaque bande de temps ou heure du jour et pour chaque appareil de traitement d'informations ;
et,
iii) les moyens de sélection d'une bande de temps ou heure du jour (260) sélectionnent de préférence, pour chacun des appareils de traitement d'informations multiples, une bande de temps ou heure du jour où il y a moins d'autres appareils de traitement d'informations avec une valeur d'indice de disponibilité égale ou supérieure à la valeur d'indice de référence, parmi les bandes de temps ou heures du jour où la valeur d'indice de disponibilité de l'appareil de traitement d'informations est égale ou supérieure à la valeur d'indice de référence, comme bande de temps ou heure du jour programmée pour l'appareil de traitement d'informations.

6. Appareil de gestion selon la revendication 2, dans lequel

i) les moyens d'acquisition de l'état d'utilisation (210) acquièrent l'état d'utilisation à partir de chacun des appareils de traitement d'informations multiples (30-1, 30-N) et quantifient les états d'utilisation acquis dans des valeurs d'indice de disponibilité ;
ii) les moyens d'enregistrement de la valeur d'indice de référence (250) enregistrent la valeur d'indice de référence pour chaque bande de temps ou heure du jour et pour chaque appareil de traitement d'informations ;
iii) les moyens de sélection d'une bande temps ou heure du jour (260) sélectionnent, pour chacun des appareils de traitement d'informations multiples, une bande de temps ou heure du jour où la valeur d'indice de disponibilité de l'appareil de traitement d'informations est égale ou supérieure à la valeur d'indice de référence, comme bande de temps ou heure du jour programmée ;
et,
iv) l'appareil de gestion (20) comprend en outre des moyens de changement de la valeur d'indice de référence (270) pour lorsque le nombre d'appareils de traitement d'informations, pour lesquels la même bande de temps ou heure du jour programmée est sélectionnée par les moyens de sélection d'une bande de temps ou heure du jour, atteint une limite supérieure prédéterminée, réduisant la valeur d'indice de référence et entraînant une nouvelle sélection de la bande de temps ou heure du jour programmée.

7. Appareil de gestion selon la revendication 2, comprenant en outre des moyens de changement de la valeur d'indice (270) pour lorsque les moyens de sélection d'une bande de temps ou heure du jour (260) n'est pas capable de sélectionner des bandes de temps ou heures du jour multiples continues, dont la valeur d'indice de disponibilité est égale ou supérieure à la valeur d'indice de référence et dont la longueur est supérieure au temps requis pour l'exécution du programme de gestion, réduisant la valeur d'indice de référence et entraînant une nouvelle sélection d'une bande de temps ou heure du jour programmée.

8. Appareil de gestion selon la revendication 1, comprenant en outre :

   i) des moyens d'envoi d'instructions (200) pour, lorsque l'exécution du programme de gestion est ordonnée par un utilisateur de l'appareil de gestion (30-1, 30-N), envoyer une instruction d'envoi pour entraîner l'envoi de l'état d'utilisation à l'appareil de gestion, à l'appareil de traitement d'informations ;
   et,
   ii) dans lequel les moyens d'acquisition de l'état d'utilisation (210) acquièrent l'état d'utilisation provenant de l'appareil de traitement d'informations comme réponse à l'instruction d'envoi.

9. Système de gestion comprenant un appareil de gestion (20) selon l'une quelconque des revendications 1 à 8 et comprenant des moyens d'instruction d'exécution de programme (280) et au moins un appareil de traitement d'informations (30-1, 30-N) comprenant des moyens d'exécution de programme (340) pour exécuter le programme de gestion basé sur une instruction provenant des moyens d'instruction d'exécution de programme.

10. Système de gestion selon la revendication 9, dans lequel l'appareil de traitement d'informations (30-1, 30-N) comprend en outre :

    i) des moyens d'entrée d'instructions (320) pour entraîner un utilisateur de l'appareil de traitement d'informations à entrer une instruction de non-autorisation indiquant que les moyens d'instruction d'exécution du programme (280) ne sont pas autorisés à entraîner l'exécution du programme de gestion ;
    ii) des moyens de notification (370) pour, lorsque l'instruction de non-autorisation est entrée, envoyer une notification de non-autorisation indiquant que l'exécution du programme de gestion n'est pas autorisée, à l'appareil de gestion (20) ;
    et,
    iii) les moyens de sélection d'une bande de temps ou heure du jour (260) sélectionnent, lors de la réception, des moyens de notification, de la notification de non-autorisation, une autre bande de temps ou heure du jour où la valeur d'indice de disponibilité indique que l'appareil de traitement d'informations n'a pas été utilisé au ou au-dessus du taux de référence, comme bande de temps ou heure du jour programmée.

11. Système de gestion selon la revendication 10, dans lequel
    les moyens d'exécution du programme (340) entraînent le démarrage de l'exécution du programme de gestion à moins que l'instruction de non-autorisation soit entrée dans une période d'entrée prédéterminée.

12. Système de gestion selon la revendication 11, dans lequel

    i) l'appareil de traitement d'informations (30-1, 30-N) comprend en outre des moyens d'enregistrement de l'histoire du fonctionnement (310) pour enregistrer un état de fonctionnement en enregistrant périodiquement des informations indiquant que l'appareil de traitement d'informations fonctionne, en association avec le temps lorsque l'appareil de traitement d'informations fonctionne ;
    et
    ii) les moyens d'acquisition de l'état d'utilisation (210) acquièrent l'état de fonctionnement enregistré par les moyens d'enregistrement de l'histoire du fonctionnement comme état d'utilisation.

13. Code de programme lisible par ordinateur destiné à entraîner un système informatique à fonctionner comme un système de gestion (20) selon l'une quelconque des revendications 10 à 12, lorsqu'il est exécuté sur ledit système informatique.

**14.** Support d'enregistrement lisible par ordinateur sur lequel le code de programme selon la revendication 13 est enregistré.

# Fig. 1

EP 1 669 869 B1

# Fig. 2

**INSTRUCTION TO EXECUTE MANAGEMENT PROGRAM**

MANAGEMENT APPARATUS — 20

- 200 — INSTRUCTION SENDING MEANS → 30-1~N
- 210 — USE STATE ACQUISITION MEANS ← 30-1~N
- 220 — INDEX VALUE RECORDING MEANS
- 230 — SCHEDULE DB
- 240 — REFERENCE INDEX VALUE SETTING MEANS
- 250 — REFERENCE INDEX VALUE STORAGE MEANS
- 260 — TIME-OF-DAY SELECTION MEANS
- 270 — REFERENCE INDEX VALUE CHANGE MEANS
- 280 — PROGRAM EXECUTION INSTRUCTION MEANS → 30-1~N
- 290 — MANAGEMENT PROGRAM DB

## Fig. 3

INFORMATION PROCESSING APPARATUS 30-1

310 OPERATION HISTORY DB

300 OPERATION HISTORY RECORDING MEANS

320 INSTRUCTION INPUT MEANS

330 NOTIFICATION MEANS

340 PROGRAM EXECUTION MEANS

USER

20

# Fig. 4

| | | 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 |
|---|---|---|---|---|---|---|---|---|---|---|---|---|---|---|---|---|---|---|---|---|---|---|---|---|---|
| SUNDAY | BUSY RATE | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 |
| SUNDAY | OPERATION PROBABILITY | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 |
| MONDAY | BUSY RATE | 0 | 0 | 0 | 0 | 0 | 0 | 0 | 0 | 0.15 | 0.15 | 0.15 | 0.15 | 0.80 | 0.15 | 0.15 | 0.15 | 0.15 | 0.15 | 0.15 | 0.15 | 0.15 | 0.15 | 0.15 | 0.15 |
| MONDAY | OPERATION PROBABILITY | 0 | 0 | 0 | 0 | 0 | 0 | 0 | 0 | 0.15 | 0.80 | 1.00 | 1.00 | 1.00 | 1.00 | 1.00 | 1.00 | 1.00 | 0.90 | 0.80 | 0.60 | 0.40 | 0.20 | 0.10 | 0.05 |
| TUESDAY | BUSY RATE | 0 | 0 | 0 | 0 | 0 | 0 | 0 | 0 | 0.15 | 0 | 0.15 | 0.15 | 0 | 0.15 | 0.15 | 0.15 | 0.15 | 0.15 | 0.15 | 0.15 | 0.15 | 0.15 | 0.15 | 0.15 |
| TUESDAY | OPERATION PROBABILITY | 0 | 0 | 0 | 0 | 0 | 0 | 0 | 0 | 0.15 | 0.80 | 1.00 | 1.00 | 1.00 | 1.00 | 1.00 | 1.00 | 1.00 | 0.90 | 0.80 | 0.60 | 0.40 | 0.20 | 0.10 | 0.05 |
| WEDNESDAY | BUSY RATE | 0 | 0 | 0 | 0 | 0 | 0 | 0 | 0 | 0.15 | 0.15 | 0.15 | 0.15 | 0 | 0.15 | 0.15 | 0.15 | 0.15 | 0.15 | 0.15 | 0.15 | 0.15 | 0.15 | 0.15 | 0 |
| WEDNESDAY | OPERATION PROBABILITY | 0 | 0 | 0 | 0 | 0 | 0 | 0 | 0 | 0.15 | 0.80 | 1.00 | 1.00 | 1.00 | 1.00 | 1.00 | 1.00 | 1.00 | 0.90 | 0.60 | 0.40 | 0.20 | 0.10 | 0.05 | 0 |
| THURSDAY | BUSY RATE | 0 | 0 | 0 | 0 | 0 | 0 | 0 | 0 | 0.15 | 0.15 | 0.15 | 0.15 | 0 | 0 | 0.15 | 0.15 | 0.15 | 0.15 | 0.15 | 0.15 | 0.15 | 0.15 | 0.15 | 0.15 |
| THURSDAY | OPERATION PROBABILITY | 0 | 0 | 0 | 0 | 0 | 0 | 0 | 0 | 0.15 | 0.80 | 1.00 | 1.00 | 1.00 | 1.00 | 1.00 | 1.00 | 1.00 | 0.90 | 0.80 | 0.60 | 0.40 | 0.20 | 0.10 | 0.05 |
| FRIDAY | BUSY RATE | 0 | 0 | 0 | 0 | 0 | 0 | 0 | 0 | 0.15 | 0.15 | 0 | 0.15 | 0.80 | 0.15 | 0.15 | 0.15 | 0.15 | 0.15 | 0.15 | 0.15 | 0.15 | 0.15 | 0 | 0 |
| FRIDAY | OPERATION PROBABILITY | 0 | 0 | 0 | 0 | 0 | 0 | 0 | 0 | 0.15 | 0.80 | 1.00 | 1.00 | 1.00 | 1.00 | 1.00 | 1.00 | 1.00 | 0.90 | 0.50 | 0.30 | 0.20 | 0.10 | 0 | 0 |
| SATURDAY | BUSY RATE | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 |
| SATURDAY | OPERATION PROBABILITY | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 |

EP 1 669 869 B1

# Fig. 5

BUSY RATE

OPERATION
PROBABILITY

[TIME]

EP 1 669 869 B1

## Fig. 6

(A) 230

| | 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 |
|---|---|---|---|---|---|---|---|---|---|---|---|---|---|---|---|---|---|---|---|---|---|---|---|---|
| SUN | 0.00 | 0.00 | 0.00 | 0.00 | 0.00 | 0.00 | 0.00 | 0.00 | 0.00 | 0.00 | 0.00 | 0.00 | 0.00 | 0.00 | 0.00 | 0.00 | 0.00 | 0.00 | 0.00 | 0.00 | 0.00 | 0.00 | 0.00 | 0.00 |
| MON | 0.00 | 0.00 | 0.00 | 0.00 | 0.00 | 0.00 | 0.00 | 0.00 | 0.13 | 0.68 | 0.85 | 0.85 | 0.20 | 0.85 | 0.85 | 0.85 | 0.85 | 0.77 | 0.68 | 0.51 | 0.34 | 0.17 | 0.09 | 0.04 |
| TUE | 0.00 | 0.00 | 0.00 | 0.00 | 0.00 | 0.00 | 0.00 | 0.00 | 0.13 | 0.80 | 0.85 | 0.85 | 1.00 | 0.85 | 0.85 | 0.85 | 0.85 | 0.77 | 0.68 | 0.51 | 0.34 | 0.17 | 0.09 | 0.04 |
| WED | 0.00 | 0.00 | 0.00 | 0.00 | 0.00 | 0.00 | 0.00 | 0.00 | 0.13 | 0.68 | 0.85 | 0.85 | 1.00 | 0.85 | 0.85 | 0.85 | 0.85 | 0.77 | 0.51 | 0.34 | 0.17 | 0.09 | 0.04 | 0.00 |
| THU | 0.00 | 0.00 | 0.00 | 0.00 | 0.00 | 0.00 | 0.00 | 0.00 | 0.13 | 0.68 | 0.85 | 0.85 | 1.00 | 1.00 | 0.85 | 0.85 | 0.85 | 0.77 | 0.68 | 0.51 | 0.34 | 0.17 | 0.09 | 0.04 |
| FRI | 0.00 | 0.00 | 0.00 | 0.00 | 0.00 | 0.00 | 0.00 | 0.00 | 0.13 | 0.68 | 1.00 | 0.85 | 0.20 | 0.85 | 0.85 | 0.85 | 0.85 | 0.77 | 0.43 | 0.26 | 0.17 | 0.09 | 0.00 | 0.00 |
| SAT | 0.00 | 0.00 | 0.00 | 0.00 | 0.00 | 0.00 | 0.00 | 0.00 | 0.00 | 0.00 | 0.00 | 0.00 | 0.00 | 0.00 | 0.00 | 0.00 | 0.00 | 0.00 | 0.00 | 0.00 | 0.00 | 0.00 | 0.00 | 0.00 |

(B)

| | 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 |
|---|---|---|---|---|---|---|---|---|---|---|---|---|---|---|---|---|---|---|---|---|---|---|---|---|
| SUN | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 |
| MON | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 |
| TUE | 0 | 0 | 0 | 0 | 0 | 0 | 0 | 0 | 0 | 0 | 0 | 0 | 1 | 0 | 0 | 0 | 0 | 0 | 0 | 0 | 0 | 0 | 0 | 0 |
| WED | 0 | 0 | 0 | 0 | 0 | 0 | 0 | 0 | 0 | 0 | 0 | 0 | 1 | 0 | 0 | 0 | 0 | 0 | 0 | 0 | 0 | 0 | 0 | 0 |
| THU | 0 | 0 | 0 | 0 | 0 | 0 | 0 | 0 | 0 | 0 | 0 | 0 | 1 | 1 | 0 | 0 | 0 | 0 | 0 | 0 | 0 | 0 | 0 | 0 |
| FRI | 0 | 0 | 0 | 0 | 0 | 0 | 0 | 0 | 0 | 0 | 1 | 0 | 0 | 0 | 0 | 0 | 0 | 0 | 0 | 0 | 0 | 0 | 0 | 0 |
| SAT | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 |

(C)

| | 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 |
|---|---|---|---|---|---|---|---|---|---|---|---|---|---|---|---|---|---|---|---|---|---|---|---|---|
| SUN | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 |
| MON | 0 | 0 | 0 | 0 | 0 | 0 | 0 | 0 | 1 | 5 | 7 | 8 | 10 | 15 | 20 | 2 | 5 | 0 | 0 | 0 | 0 | 0 | 0 | 0 |
| TUE | 0 | 0 | 0 | 0 | 0 | 0 | 0 | 0 | 1 | 15 | 5 | 20 | 95 | 10 | 5 | 10 | 10 | 0 | 0 | 0 | 0 | 0 | 0 | 0 |
| WED | 0 | 0 | 0 | 0 | 0 | 0 | 0 | 0 | 2 | 5 | 20 | 8 | 95 | 20 | 10 | 5 | 5 | 0 | 0 | 0 | 0 | 0 | 0 | 0 |
| THU | 0 | 0 | 0 | 0 | 0 | 0 | 0 | 0 | 1 | 5 | 10 | 10 | 95 | 30 | 10 | 5 | 5 | 0 | 0 | 0 | 0 | 0 | 0 | 0 |
| FRI | 0 | 0 | 0 | 0 | 0 | 0 | 0 | 0 | 1 | 5 | 20 | 8 | 10 | 25 | 10 | 5 | 5 | 0 | 0 | 0 | 0 | 0 | 0 | 0 |
| SAT | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 |

EP 1 669 869 B1

EP 1 669 869 B1

# Fig. 7

MANAGEMENT APPARATUS 20      INFORMATION PROCESSING APPARATUS 30-1

**START**      **START**

S700 — HAS INSTRUCTION TO EXECUTE MANAGEMENT PROGRAM BEEN RECEIVED? — NO

RECORDS OPERATION STATE — S710

YES — S705 — SENDS SENDING INSTRUCTION

SENDS SYSTEM USE RATE, USE FREQUENCY AND OPERATION STATE AS REPLY TO SENDING INSTRUCTION — S715

S720 — HAVE SYSTEM USE RATE, USE FREQUENCY AND OPERATION STATE BEEN RECEIVED? — NO

YES

QUANTIFIES SYSTEM USE RATE, USE FREQUENCY AND OPERATION PROBABILITY INTO INDEX VALUE — S725

RECORDS INDEX VALUE FOR EACH TIME-OF-DAY — S730

PROCESSING FOR SELECTING SCHEDULED TIME-OF-DAY — S735

PERFORMS NOTIFICATION TO THE EFFECT THAT MANAGEMENT PROGRAM IS TO BE EXECUTED — S740

PROCESSING FOR CAUSING UNPERMISSION INSPECTION TO BE INPUTTED — S745

S750 — HAS UNPERMISSION INSTRUCTION BEEN INPUTTED? — NO

YES — S755 — NOTIFICATION PROCESSING

S760 — HAS UNPERMISSION NOTIFICATION BEEN RECEIVED? — YES / NO

S770 — HAS PREDETERMINED INPUT PERIOD ELAPSED? — NO

YES — EXECUTES MANAGEMENT PROGRAM — S780

**END**      **END**

## Fig. 8

S735

```
                    START

         SELECTS REFERENCE INDEX
         VALUE FOR INFORMATION        S800
         PROCESSING APPARATUS 30-1

                                S810
              IS OPERATION
         TENDENCY INDEX OF ENTIRE      NO
            ONE WEEK BELOW
         PREDETERMINED VALUE?

                   YES

         DECREASES REFERENCE          S820
            INDEX VALUE

                                S830
              IS THERE ONE
     NO   INFORMATION PROCESSING
               APPARATUS TO
               BE MANAGED?

                   YES

S870                            S840                      S850
   PROCESSING FOR          HAVE CONTINUOUS
  SELECTING SCHEDULED    TIME-OF-DAY EXCEEDING    NO   DECREASES REFERENCE
    TIME-OF-DAY FOR          REQUIRED TIME                INDEX VALUE
      MULTIPLE            BEEN DETECTED?
  MANAGEMENT TARGETS

                          YES

                     SELECTS DETECTED        S860
                      TIME-OF-DAY

                          END
```

26

# Fig. 9

S870

START

SETS REFERENCE INDEX VALUE — S900

CLEARS DATA IN WHICH PROGRESS OF TIME-OF-DAY SELECTION IS RECORDED — S910

REPEATS PROCESSING FOR RESPECTIVE INFORMATION PROCESSING APPARATUSES — S920

SELECTS TIME-OF-DAY WHERE THE NUMBER OF INFORMATION PROCESSING APPARATUSES WITH INDEX VALUE EQUAL TO OR ABOVE REFERENCE INDEX VALUE IS THE SMALLEST — S930

S940
IS INDEX VALUE EQUAL TO OR ABOVE REFERENCE INDEX VALUE AT MULTIPLE TIME-OF-DAY CONTINUOUS FROM SELECTED TIME-OF-DAY?

YES

S945
SELECTS TIME-OF-DAY AS SCHEDULE TIME-OF-DAY

NO

S950
HAVE ALL TIME-OF-DAY SELECTED AS CANDIDATE?

NO

S960
SELECTS TIME-OF-DAY WHERE THE NUMBER OF INFORMATION PROCESSING APPARATUSES WITH INDEX VALUE EQUAL TO OR ABOVE REFERENCE INDEX VALUE IS THE SECOND SMALLEST

YES

DECREASES REFERENCE INDEX VALUE — S970

S980
HAS THE NUMBER OF INFORMATION PROCESSING APPARATUSES FOR WHICH THE SAME SCHEDULED TIME-OF-DAY IS SELECTED REACHED UPPER LIMIT?

NO

YES

EXCLUDES SCHEDULED TIME-OF-DAY FROM TIME-OF-DAYS WHICH CAN BE SELECTED — S990

TERMINATES REPETITION FOR RESPECTIVE INFORMATION PROCESSING APPARATUSES — S995

END

# Fig. 10

EP 1 669 869 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2002215400 A
- US 200350762 B
- US 6401238 B1, BROWN
- US 6393101 B1, BARSHEFSKY
- US 6038586 A, FRYE